(19) Europäisches Patentamt
European Patent Office
Office européen des brevets

(11) **EP 4 613 102 A1**

(12) **EUROPÄISCHE PATENTANMELDUNG**

(43) Veröffentlichungstag:
**10.09.2025  Patentblatt 2025/37**

(51) Internationale Patentklassifikation (IPC):
***A22C 11/08*** *(2006.01)*

(21) Anmeldenummer: **25156672.5**

(52) Gemeinsame Patentklassifikation (CPC):
**A22C 11/08**

(22) Anmeldetag: **07.02.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  **08.03.2024  DE 102024106772**

(71) Anmelder: **VEMAG Maschinenbau GmbH**
**27283 Verden/Aller (DE)**

(72) Erfinder:
• **NILSSON, Kersten**
**27313 Dörverden (DE)**
• **KIEL, Tobias**
**27283 Verden (Aller) (DE)**
• **KÖHLER, Sven**
**27283 Verden (DE)**

(74) Vertreter: **Eisenführ Speiser**
**Patentanwälte Rechtsanwälte PartGmbB**
**Postfach 10 60 78**
**28060 Bremen (DE)**

(54) **FÖRDERVORRICHTUNG UND FÜLLMASCHINE FÜR PASTÖSES LEBENSMITTEL, INSBESONDERE FLEISCH- ODER TEIGWAREN**

(57)    Die Erfindung betrifft eine Fördervorrichtung (1) für pastöses Lebensmittel, insbesondere Fleisch- oder Teigwaren, mit
einem Gehäuse (2), welches einen Lebensmittel-Einlass (6) und einen Lebensmittel-Auslass (8) und eine Förderkammer (4) aufweist,
einer ersten in der Förderkammer (4) rotierbar angeordneten Förderschnecke (10) und
einer zweiten in der Förderkammer (4) rotierbar angeordneten Förderschnecke (12),
wobei die erste und zweite Förderschnecke (10, 12) im Wesentlichen mit ihren Rotationsachsen parallel zueinander angeordnet sind und ineinandergreifende schraubenförmige Wendeln (14, 16) aufweisen.

   Erfindungsgemäß wird die Steigung der Wendeln (14, 16) der Förderschnecken (10, 12) in mindestens einem Teil-Abschnitt (18) zwischen Einlass (6) und Auslass (8) kontinuierlich kleiner.

Fig. 1

EP 4 613 102 A1

## Beschreibung

Die Erfindung betrifft eine Fördervorrichtung gemäß dem Oberbegriff des Anspruchs 1, mit einem Gehäuse 2, welches einen Lebensmittel-Einlass 6 und einen Lebensmittel-Auslass 8 und eine Förderkammer 4 aufweist, einer ersten in der Förderkammer 4 rotierbar angeordneten Förderschnecke 10 und einer zweiten in der Förderkammer 4 rotierbar angeordneten Förderschnecke 12, wobei die erste und zweite Förderschnecke 10, 12 im Wesentlichen mit ihren Rotationsachsen parallel zueinander angeordnet sind und ineinandergreifende schraubenförmige Wendeln 14, 16 aufweisen.

in der Förderkammer erstreckenden Förderschnecke.

Fördervorrichtungen der vorstehend genannten Art, beispielsweise aus EP 2769621 B1 oder EP 2710896 B1 der Anmelderin bekannt, werden zur Herstellung und Verarbeitung von pastösen Lebensmitteln wie beispielsweise Fleisch-Brät oder Teig eingesetzt. Im Folgenden wird synonym für Lebensmittel auch der Begriff "Produkt" oder "Masse" verwendet. Die Fördervorrichtungen kommen zum Beispiel innerhalb einer Vakuum-Füllmaschine zum Einsatz. Im Gehäuse sind ein Einlass und ein Auslass sowie zwei Förderschnecken, auch als Förderkurven bezeichnet, mit ihren schraubenförmigen Wendeln drehbeweglich innerhalb der in dem Gehäuse ausgebildeten Förderkammer angeordnet und mittels eines Motors antreibbar, wobei mit den ineinandergreifenden Wendeln das Produkt im Wesentlichen in Längsrichtung der Förderschnecken und damit in eine Förderrichtung innerhalb von Hohlräumen der Förderkammer bewegt wird.

In der Lebensmittelindustrie bestehen hohe Anforderungen an die Produktqualität. Verarbeitende Betriebe und Hersteller von Vorrichtungen zur Lebensmittelförderung sind in zunehmendem Maße bestrebt, hohe Produktqualität mit gutem Erscheinungsbild und in präzisen Mengen bereitzustellen. Beim Fördern und Verarbeiten pastöser Lebensmittel nimmt die Anwesenheit von Gasen, die in Form von Gasblasen vorliegen, Einfluss auf die Qualität und das Erscheinungsbild des Produkts. Dem sog. Entgasen, das heißt dem Eliminieren großer Gasblasen aus dem Lebensmittel, kommt eine nicht geringe Bedeutung zu. Ebenso ist bei Fördervorrichtungen der eingangs genannten Art der sogenannten Verschmierung entgegenzuwirken. Darunter versteht man bei Fleischprodukten nachteilige Effekte durch Reibung der Partikel an Wandungen des Förderwerks wie hier den Gehäusewandungen und Oberflächen der Förderschnecken. Durch Verschmierung bildet sich in dem Lebensmittel eine Emulsion, verursacht durch Scherung. Dadurch brechen die Fleischzellen auf und Zellsaft tritt aus, Fettzellen verlieren einen Teil ihres Fettes. Das Ergebnis ist eine schmierige Konsistenz des Wurstmaterials, mit erhöhter Verderbnisgefahr (z. B. Oxidationsanfälligkeit) und einer Beeinträchtigung der weiteren Verarbeitungseignung.

Vor diesem Hintergrund liegt der vorliegenden Erfindung die Aufgabe zugrunde, eine Lebensmittel-Fördervorrichtung anzugeben, welche die Qualität des Lebensmittels nicht oder nur möglichst gering nachteilig beeinflusst, welche eine hohe Qualität des Lebensmittels gewährleistet, insbesondere Verschmierung vermeidet und auch ungünstige Effekte von Gasblasen reduziert; ferner soll auch eine hohe Portioniergenauigkeit des zu fördernden Lebensmittels erreicht werden können.

Die Erfindung löst die Aufgabe bei einer Vorrichtung der eingangs genannten Art dadurch, dass die Steigung der Wendeln der Förderschnecken in mindestens einem Teil-Abschnitt zwischen Einlass und Auslass kontinuierlich kleiner wird. (Anspruch 1)

Erfindungsgemäß wird durch die sich kontinuierlich verkleinernde Steigung der Wendeln der Förderschnecken in mindestens einem Teil-Abschnitt der Förderschnecken und damit auch mindestens in einem Teil-Abschnitt der Förderkammer erreicht, dass sich das freie Volumen für Lebensmittel im Bereich der Förderkurven kontinuierlich verringert. Gleichzeitig werden die Volumina in der Kammer möglichst dichtgehalten mit geringen, definierten Spaltmaßen zwischen Oberflächen der Förderschnecken und Oberflächen der Förderschnecken relativ zu inneren Oberflächen des Gehäuses. Dadurch kommt es zu einer geringen Rückströmung der Lebensmittelmasse. Verschmierung-Effekte sind reduziert. Dadurch wird auch die Portionierung, das heißt, die geförderte Menge der Lebensmittelmasse, genauer. Das Volumen wird durch die sich kontinuierlich verkleinernde Steigung in diesem Teil-Abschnitt in Förderrichtung geringer, dadurch entsteht eine Verdichtung des Produktes.

Die erfindungsgemäßen Effekte kommen auch besonders zum Tragen, wenn die Fördervorrichtung im Zusammenhang mit einer Vakuum-Füllmaschine zum Einsatz kommt, bei der wenigstens ein Teil-Abschnitt der Förderschnecken einem Unterdruck (Vakuum) ausgesetzt wird, um die Lebensmittelmasse in die Kammer im Bereich der Förderschnecken hinein zu saugen. Dennoch kann es unerwünscht dazu kommen, dass die freien Volumina unterfüllt sind. In einigen Produkten sind Gaseinschlüsse vorhanden. Erfindungsgemäß wird zum Ausgleich und insbesondere zur Verkleinerung von Gaseinschlüssen durch die sich kontinuierlich verkleinernde Steigung der Wendeln das Volumen verkleinert und Lebensmittelmasse verdichtet.

Gemäß einer bevorzugten Ausführungsform wird vorgeschlagen, dass jede Förderschnecke in axialer Richtung bezogen auf die Rotationsachsen mehrere Abschnitte aufweist, insbesondere einen Antriebs-Abschnitt, einen Vakuum-Abschnitt, einen Verdichtungs-Abschnitt, einen Portionier-Abschnitt und/oder einen Auslauf-Abschnitt. Durch eine derartige abschnittsweise Gestaltung werden sich anschließende Funktionsbereiche erreicht, die jeweils effizient arbeiten können, um eine produktschonende und portionsgenaue Förderung zu erreichen. Erfindungsgemäß sind bevorzugt alle oben bezeichneten Abschnitte in der genannten Reihenfolge oder gegebenenfalls auch einer anderen Reihenfolge vorgesehen, die Fördervorrichtung könnte aber alternativ auch funktional sein, wenn nur ausgewählte Abschnitte aus der obigen Aufzählung vorhanden sind.

Besonders bevorzugt ist es erfindungsgemäß, dass der Abschnitt mit kontinuierlich kleiner werdender Steigung der Wendel der Förderschnecke als Verdichtungs-Abschnitt ausgebildet ist, derart, dass das freie Volumen für das zu fördernde Lebensmittel in diesem Abschnitt in Förderrichtung kontinuierlich abnimmt.

Zweckmäßigerweise ist mit Blick auf eine schonende und effiziente Förderung der Lebensmittelmasse vorgesehen, dass der Verdichtungs-Abschnitt mindestens teilweise benachbart zu dem Einlass in einem Einlaufbereich des Gehäuses ausgebildet ist. Weiterhin ist es bevorzugt, dass der Verdichtungs-Abschnitt mit kontinuierlich kleiner werdender Steigung stromabwärts von dem Einlaufbereich ausgebildet ist, besonders bevorzugt mindestens teilweise unterhalb des Einlasses und des Einlaufbereichs angeordnet ist. Insbesondere in dem letztgenannten Fall unterstützt die Wirkung der Schwerkraft die Förderung typischerweise aus einem Trichter einer Füllmaschine derart, dass der erfindungsgemäß gestaltete Verdichtungs-Abschnitt unmittelbar unterhalb des Einlaufbereichs und unterhalb des typischerweise radial - bezogen auf die Längsachsen der Förderschnecken - angeordneten Einlasses für die Lebensmittelmasse angeordnet ist.

Bei einer alternativen Ausführungsform bzw. Weiterbildung ragt der Verdichtungs-Abschnitt mit kleiner werdender Steigung der Wendeln teilweise in den Vakuum-Abschnitt hinein, mit dem vorteilhaften Effekt, dass das Produkt effizient ein gesaugt wird und dann sogleich erfindungsgemäß verdichtet wird und gefördert wird durch die sich verkleinerten Volumina im Bereich der Förderschnecken. Bevorzugt ist es alternativ, dass der Verdichtungs-Abschnitt sich bis in den Bereich des Auslasses erstreckt; so kann eine stärkere Verdichtung erfolgen.

Besonders bevorzugt ist es ferner, dass die Förderschnecken - in Förderrichtung - einen Vakuum-Abschnitt, den in Förderrichtung sich an diesen anschließenden Verdichtungs-Abschnitt und den in Förderrichtung sich daran anschließenden Portionier-Abschnitt und den sich in Förderrichtung daran anschließenden Auslauf-Abschnitt aufweisen.

Bei einer weiteren bevorzugten Ausführungsform ist vorgesehen, dass Vakuum-Abschnitt der Förderschnecken jeweils Wendeln mit im Wesentlichen konstanter Steigung und der Portionier-Abschnitt die Steigungsänderung aufweist, wobei der Verdichtungs-Abschnitt mit kontinuierlich kleiner werdender Steigung der Wendeln zwischen Vakuum-Abschnitt und Portionier-Abschnitt angeordnet ist.

Eine günstige geometrische Gestaltung ergibt sich ferner dadurch, dass der Portionier-Abschnitt in etwa eine Länge hat, die das 1,5 - 4fache, vorzugsweise 2 der Steigung des Portionier-Abschnitts entspricht.

Die Erfindung ist nachfolgend anhand eines Ausführungsbeispiels einer Fördervorrichtung und einer Füllmaschine anhand der beigefügten Figuren beschrieben; es zeigen:

Fig. 1: eine Füllmaschine und Fördervorrichtung in einer Seitenansicht mit Teilschnittdarstellung;

Fig. 2: eine Draufsicht auf das Gehäuse und die erste und zweite Förderschnecke innerhalb des Gehäuses;

Fig. 3: eine Draufsicht von oben auf das Gehäuse der Fördervorrichtung;

Fig. 4: eine Schnittdarstellung entlang A-A gemäß Fig. 3;

Fig. 5: eine Teil-Schnittdarstellung durch das Gehäuse im Bereich des Auslauf-Abschnitts der Förderschnecken bzw. des Gehäuses der Fördervorrichtung;

Fig. 6 ein weiteres Ausführungsbeispiel der Förderschnecke mit eingetragenen Werten; und

Fig. 7 ein weiteres Ausführungsbeispiel der Förderschnecke mit eingetragenen Werten.

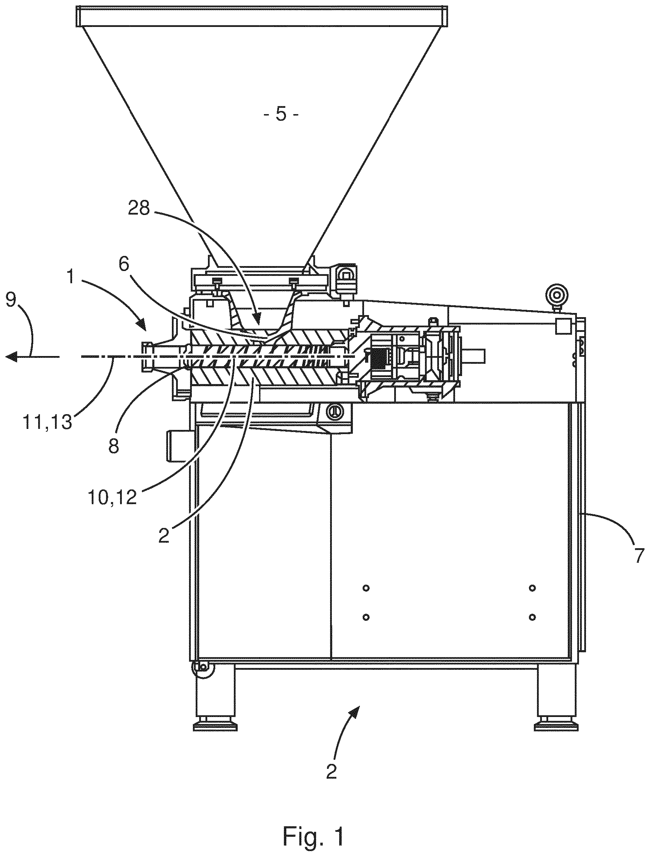

Figur 1 zeigt in einer Seitenansicht mit einem Teilschnitt eine erfindungsgemäße Füllmaschine 3. Eine erfindungsgemäße Fördervorrichtung 1 für pastöses Lebensmittel ist hier integriert in das Gehäuse der Füllmaschine 3; alternativ könnte die Fördervorrichtung 1 auch in einem separaten Gehäuse als "stand-alone"-Maschine ausgestaltet sein. Die hier gezeigte Fördervorrichtung 1 ist in die Füllmaschine 3 mit Trichter 5 zur Aufnahme des zu fördernden Lebensmittels integriert, wobei der Trichter 5 der Füllmaschine 3 im Wesentlichen oberhalb von der Fördervorrichtung 1 derart angeordnet ist, dass das fließfähige Lebensmittel durch einen Einlaufbereich 28 in einen Einlass 6, welcher in dem Gehäuse 2 ausgebildet ist, einleitbar ist.

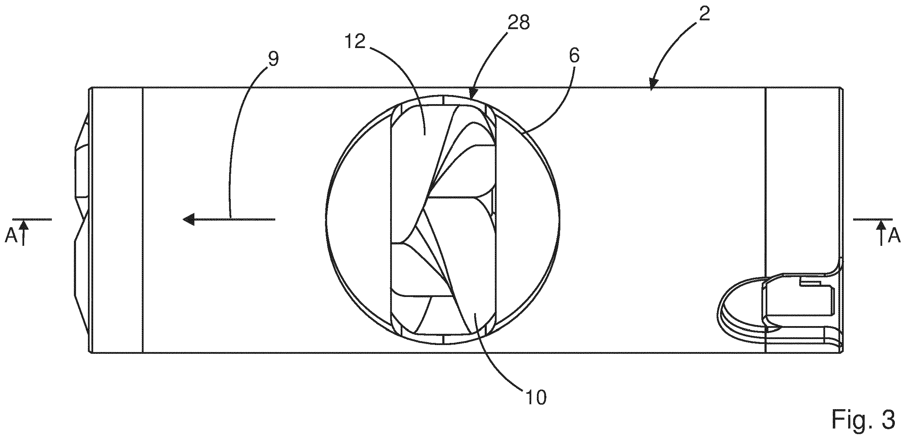

Wie die Figuren 1-4 weiter veranschaulichen, hat die Fördervorrichtung 1 ein Gehäuse 2 aus Metall, vorzugsweise nicht rostendem Stahl. Das Gehäuse 2 weist einen Hohlraum auf, der eine Förderkammer 4 definiert. Durch einen Lebensmittel-Einlass 6 kann eine pastöse fließfähige Lebensmittel-Masse Ausgangsbeispiel radial von oben durch einen Einlaufbereich 28 in die Förderkammer 4 eingeleitet werden. Ferner ist ein Lebensmittel-Auslass 8 vorgesehen, durch das die geförderte Masse abgegeben und weiterverarbeitet werden kann.

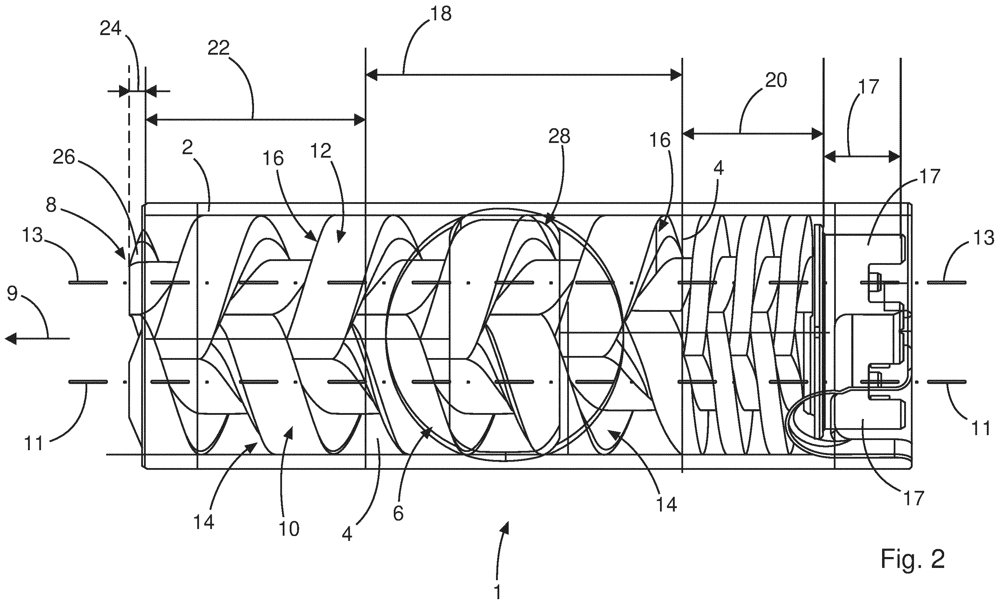

Wie Figuren 2-5 veranschaulichen, sind innerhalb der Förderkammer 4 eine erste rotierbar gelagerte und mittels eines Antriebs-Motors antreibbare Förderschnecke 10 und eine zweite gleichermaßen rotierbare Förderschnecke 12 angeordnet. Die erste und zweite Förderschnecke 10, 12 haben parallel zueinander angeordnete Rotationsachsen 11, 13. Beide Förderschnecken 10, 12 haben außen vorstehende schraubenförmige Wendeln 14, 16, die ineinandergreifen. Außen liegen die Wendeln 14,16 an der inneren Oberfläche des Gehäuses 2 an; die äußeren Oberflächen der Wendeln 14,16 sind im Wesentlichen spiralförmig und außen eben ausgebildet, sodass außen ein längerer Spalt zwischen der Oberfläche der Wendeln 14, 16 und der Oberfläche des Gehäuses 2 entsteht, welcher eine Abdichtung bewirkt. So ist durch die Förderschnecken 10, 12 zusammen mit dem Gehäuse 2 eine Förderkammer 4 gebildet, welche eine Vielzahl von Hohlräumen aufweist, in die Lebensmittelmasse gelangt und aus dem Einlass 6 im Wesentlichen in Förderrichtung 9 zu dem Auslass 8 gefördert wird, wenn durch den Antrieb (nicht gezeigt) die Förderschnecken 10, 12 um die jeweilige Rotationsachse 11 bzw. 12 rotiert werden.

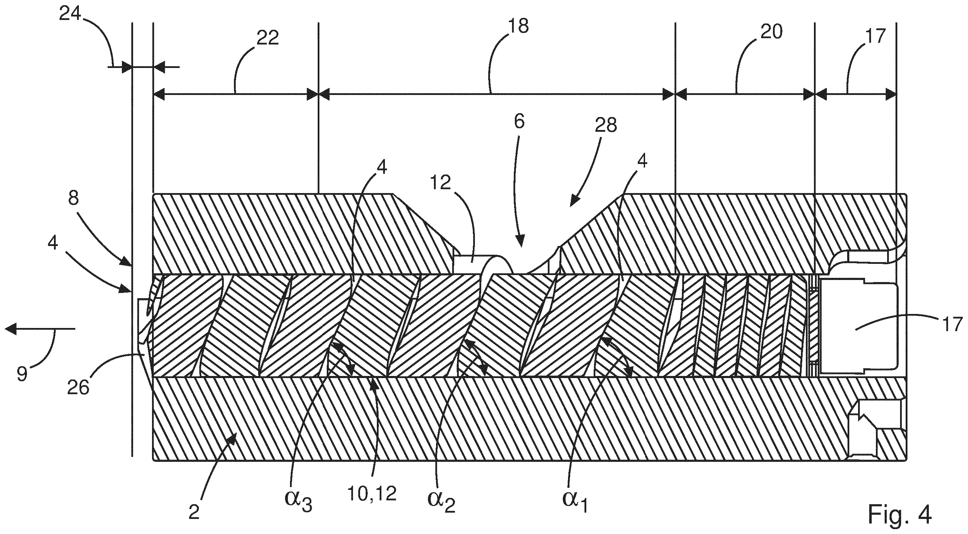

Jede Förderschnecke 10,12 weist, wie gut in den Figuren 2 und 4 erkennbar, in dem gezeigten Ausführungsbeispiel exemplarisch mehrere Abschnitte 17, 18, 20, 22, 24, 26 auf, insbesondere in Förderrichtung 9 gesehen einen Antriebs-Abschnitt 17, einen Vakuum-Abschnitt 20, einen Verdichtungs-Abschnitt 18, einen Portionier-Abschnitt 22 und/oder einen Auslauf-Abschnitt 24. In Figur 2 und 4 sind rechts an den Förderschnecken 10,12 jeweils ein Antriebs-Abschnitt 17 erkennbar, der jeweils mit einem Antriebs-Motor (nicht gezeigt) gekoppelt werden kann, um die Förderschnecken 10, 12 rotierend antreiben zu können.

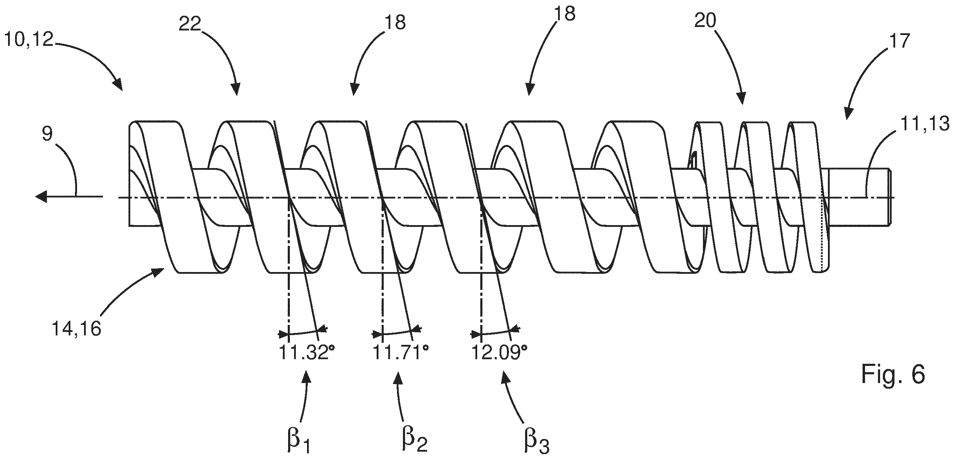

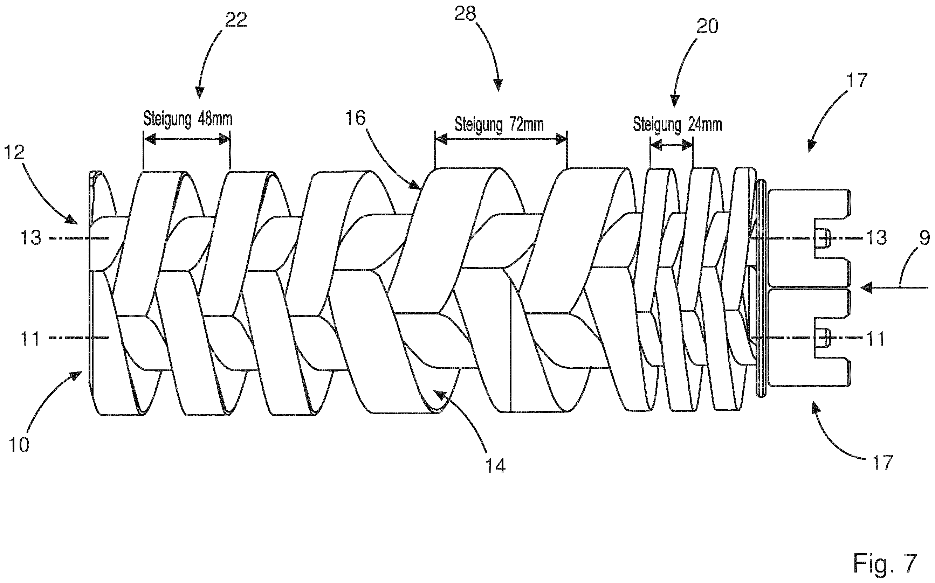

Wie insbesondere die Figuren 2 und 4 sowie 6 und 7 veranschaulichen, haben die Wendeln 14, 16 der Förderschnecken 10, 12 eine Steigung (veranschaulicht auch durch den Winkel $\alpha$ in Figur 4 oder $\beta$ in Figur 6 oder die Steigungs-Angabe in Fig. 7). Die Steigung kann an verschiedenen Abschnitten der Förderschnecken 10, 12 verschieden sein. Die Steigung der Wendeln 14, 16 der Förderschnecken 10, 12 sind so gestaltet, dass sie in mindestens einem Teil-Abschnitt 18 zwischen Einlass 6 und Auslass 8 kontinuierlich kleiner wird; dies ist bei dem gezeigten Ausführungsbeispiel bei einem sogenannten Verdichtungs-Abschnitt 18 der Fall, wie in Figur 4 ersichtlich und illustriert durch die verschiedenen Winkel $\alpha$, der an drei Orten innerhalb des Verdichtungs-Abschnitts 18 eingetragen ist. In Fig. 4 sind Winkel $\alpha$ angetragen zwischen den Flankenflächen der Wendeln 14, 16 und einer Parallelen zur Rotationsachse 11, 13. In Förderrichtung 9 steigt der Winkel $\alpha$, der ein Maß für die Steigung der Wendeln 14, 16 in diesem Bereich ist, an, beispielsweise von $\alpha_1$ gleich 83°, zu $\alpha_2$ gleich 74° zu $\alpha_3$ gleich 78°.

Die Steigungen sind darüber hinaus in den beigefügten Figuren 6 und 7 veranschaulicht. In Fig. 6 sind exemplarisch drei Winkel $\beta_{1, 2, 3}$ an drei Orten angetragen, hier zwischen den Flankenflächen der Wendeln 14, 16 und einer Senkrechten zur Rotationsachse 11, 13. $\beta_1$ beträgt 11,32 °, $\beta_2$ beträgt 11,71° und $\beta_3$ beträgt 12,09

°.

Fig. 7 veranschaulicht exemplarisch die Definition einer Steigung, hier an drei verschiedenen Orten mit Steigungen von 48mm im Bereich des Portionier-Abschnittes 22, eine Steigung von 72mm im Bereich des Einlaufbereiches 28 und eine Steigung von 24mm im Bereich des Vakuum-Abschnitts 20 gezeigt.

Der Abschnitt 18 mit kontinuierlich kleiner werdender Steigung der Wendel der Förderschnecke ist im Ausführungsbeispiel als Verdichtungs-Abschnitt 18 ausgebildet ist, derart, dass das freie Volumen für das zu fördernde Lebensmittel in diesem Abschnitt in Förderrichtung 9 kontinuierlich abnimmt und das Produkt verdichtet wird bei Förderung in Richtung 9. Der Verdichtungs-Abschnitt 18 ist mindestens teilweise benachbart zu dem Einlass 6 in dem Einlaufbereich 28 des Gehäuses 2 ausgebildet; der Verdichtungs-Abschnitt 18 ist genauer teilweise unterhalb des Einlasses 6 und des Einlaufbereichs 28 angeordnet. Der Verdichtungs-Abschnitt 18 mit kontinuierlich kleiner werdender Steigung setzt sich fort in Förderrichtung 9 stromabwärts von dem Einlaufbereich 28.

Man erkennt gut in Figur 2 und 4, dass der Verdichtungs-Abschnitt 18 mit kleiner werdender Steigung der Wendeln 14, 16 teilweise in den Vakuum-Abschnitt 20 hineinragt. Auf der gegenüberliegenden Seite erstreckt sich der Verdichtungs-Abschnitt 18 in Richtung des Auslasses 8, im Ausführungsbeispiel bis zu einem Portionieren-Abschnitt 22. Damit ist insgesamt folgende Reihenfolge von Abschnitten gebildet: die Förderschnecken 10, 12 haben einen Antriebs-Abschnitt 17, einen Vakuum-Abschnitt 20, den in Förderrichtung 9 sich an diesen anschließenden Verdichtungs-Abschnitt 18 und den in Förderrichtung sich daran anschließenden Portionier-Abschnitt und den sich in Förderrichtung daran anschließenden Auslauf-Abschnitt 24. Der Vakuum-Abschnitt 20 der Förderschnecken 10, 12 weist vorzugsweise Wendeln 14, 16 mit im Wesentlichen konstanter Steigung auf.

Alternativ kann in nicht dargestellter Weise der Portionier-Abschnitt 22 statt des Verdichtung-Abschnitts 18 die Steigungsänderung aufweisen, d. h. eine kontinuierlich kleiner werdende Steigung der Wendeln. Der Portionier-Abschnitt 22 hat beispielsweise in etwa eine Länge, die das 1,5-fache der Steigung des Portionier-Abschnitts 22 entspricht.

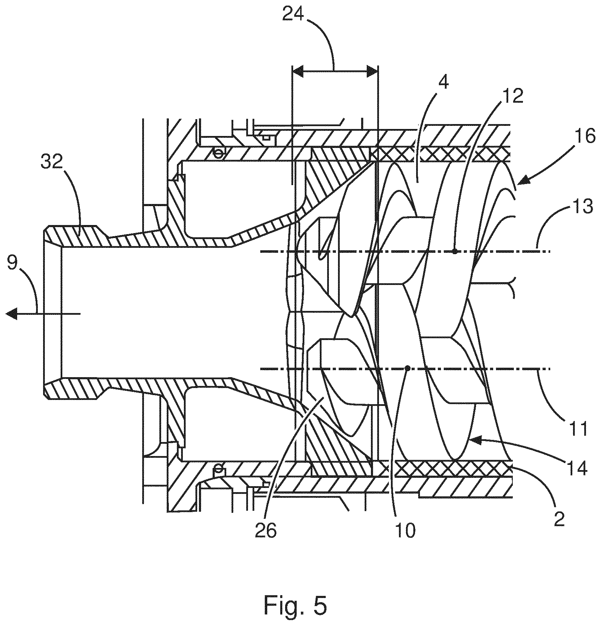

Die Fördervorrichtung 1 ist so ausgebildet, dass sich an den Auslass 8 axial stromabwärts in Förderrichtung 9 mindestens ein Vorsatzgerät montieren lässt, beispielsweise ein Füllrohr oder ein nicht gezeigtes an sich bekanntes Längenportioniergerät, ein Hackfleischverarbeitungsgerät oder eine Darmhaltevorrichtung. Zu diesem Zweck ist an das Maschinengestell 7 ein Adapter in Form eines Füllrohrhalters 32 montiert, an dem das Vorsatzgerät angeschlossen werden kann. Im gezeigten Ausführungsbeispiel ist, wie insbesondere die vergrößerte Darstellung gemäß Figur 5 veranschaulicht, ein Füllrohrhalter 32 lösbar mit dem Maschinengestell 7 koppelbar.

Figur 5 veranschaulicht auch vergrößert einen Auslauf-Abschnitt 24 mit einem Auslauf-Konus 26, der Teil der beiden Förderschnecken 10,12 ist und sich nach innen hin verjüngt.

Beispielsweise sind die Steigungen der Wendeln 14, 16 gemäß nachfolgender Kalkulation vorgenommen:

Berechnung der Steigung abschnittsweise:

1. Lineare Steigung im Portionierteil
2. Kontinuierlich geänderte Steigung im Verdichtungsteilstück
3. Lineare Steigung unter dem Einlauf
4. Lineare Steigung im Vakuumteilstück

**Abschnitt 1:0...$t_0$**

Es gilt:

$$f(t) = a * t$$

wobei:

$$a = \frac{Steigung\ [mm]}{Umfang\ [mm]}$$

$$t = Anzahl\ der\ Umdrehungen\ [-] * Umfang\ [mm]$$

Beispiel: Steigung = 96, Steigungslänge = 144, Durchmesser der Kurve = 108

$$\rightarrow a = \frac{96mm}{108mm * \pi} = 0,2829$$

$$\rightarrow Anzahl\ Umdrehungen = \frac{144mm}{96mm} = 1,5$$

$$t = 0 \dots (1,5 * 108 * \pi) = 0 \dots 508,938$$

**Abschnitt 2:$t_0$...$t_1$**

Es gilt:

$$f(t) = a * t + c * (t - t_0)^2$$

Der Faktor c beeinflusst die Gesamtlänge der Kurve und muss so gewählt werden, dass die Länge passt.

**Abschnitt 3:$t_1$...$t_2$**

Es gilt:

$$f(t) = b * t - d$$

wobei:

$$b = a + 2 * c * (t_1 - t_0)$$

$$d = c * (t_1^2 - t_0^2)$$

**Abschnitt 4: $t_2$...$t_3$**

Es gilt:

$$f(t) = e * t + g$$

wobei:

$$e = \frac{Steigung\ [mm]}{Umfang\ [mm]}$$

$$g = \frac{f(t_2)}{e * t_2}$$

$$t_3 = Länge\ der\ Kurve$$

Bezugszeichenliste

| | |
|---|---|
| 1 | Fördervorrichtung |
| 2 | Gehäuse |
| 3 | Füllmaschine |
| 4 | Förderkammer |
| 5 | Trichter |
| 6 | Einlass |
| 7 | Maschinengestell |
| 8 | Auslass |
| 9 | Förderrichtung |
| 10 | erste Förderschnecke |
| 11 | Rotationsachse |
| 12 | zweite Förderschnecke |
| 13 | Rotationsachse |
| 14 | Wendel |
| 16 | Wendel |
| 17 | Antriebs-Abschnitt |
| 18 | Verdichtungs-Abschnitt |
| 20 | Vakuum-Abschnitt |
| 22 | Portionier-Abschnitt |
| 24 | Auslauf-Abschnitt |
| 26 | Auslauf-Konus |
| 28 | Einlaufbereich |
| 32 | Füllrohrhalter |
| $\alpha$ | Steigungswinkel |
| $\beta$ | Steigungswinkel |

**Patentansprüche**

1. Fördervorrichtung (1) für pastöses Lebensmittel, insbesondere Fleisch- oder Teigwaren, mit

einem Gehäuse (2), welches einen Lebensmittel-Einlass (6) und einen Lebensmittel-Auslass (8) und eine Förderkammer (4) aufweist,

einer ersten in der Förderkammer (4) rotierbar angeordneten Förderschnecke (10) und einer zweiten in der Förderkammer (4) rotierbar angeordneten Förderschnecke (12),

wobei die erste und zweite Förderschnecke (10, 12) im Wesentlichen mit ihren Rotationsachsen parallel zueinander angeordnet sind und ineinandergreifende schraubenförmige Wendeln (14, 16) aufweisen,

**dadurch gekennzeichnet, dass**

die Steigung der Wendeln (14, 16) der Förderschnecken (10, 12) in mindestens einem Teil-Abschnitt (18) zwischen Einlass (6) und Auslass (8) kontinuierlich kleiner wird.

2.  Fördervorrichtung (1) nach Anspruch 1, **dadurch gekennzeichnet, dass** jede Förderschnecke in axialer Richtung bezogen auf die Rotationsachsen mehrere Abschnitte (17, 18, 20, 22, 24, 26) aufweist, insbesondere einen Antriebs-Abschnitt (17), einen Vakuum-Abschnitt (20), einen Verdichtungs-Abschnitt (18), einen Portionier-Abschnitt (22) und/oder einen Auslauf-Abschnitt (24).

3.  Fördervorrichtung (1) nach Anspruch 1 und/oder Anspruch 2, **dadurch gekennzeichnet, dass** der Abschnitt (18) mit kontinuierlich kleiner werdender Steigung der Wendel der Förderschnecke als Verdichtungs-Abschnitt (18) ausgebildet ist, derart, dass das freie Volumen für das zu fördernde Lebensmittel in diesem Abschnitt in Förderrichtung (9) kontinuierlich abnimmt.

4.  Fördervorrichtung (1) nach mindestens einem der vorstehenden Ansprüche, **dadurch gekennzeichnet, dass** der Verdichtungs-Abschnitt (18) mindestens teilweise benachbart zu dem Einlass (6) in einem Einlaufbereich (28) des Gehäuses (2) ausgebildet ist.

5.  Fördervorrichtung (1) nach mindestens einem der vorstehenden Ansprüche, **dadurch gekennzeichnet, dass** der Verdichtungs-Abschnitt (18) mit kontinuierlich kleiner werdender Steigung stromabwärts von dem Einlaufbereich (28) ausgebildet ist.

6.  Fördervorrichtung (1) nach mindestens einem der vorstehenden Ansprüche, **dadurch gekennzeichnet, dass** der Verdichtungs-Abschnitt (18) mindestens teilweise unterhalb des Einlasses (6) und des Einlaufbereichs (28) angeordnet ist.

7.  Fördervorrichtung (1) nach mindestens einem der vorstehenden Ansprüche, **dadurch gekennzeich-**

net, dass** der Verdichtungs-Abschnitt (18) mit kleiner werdender Steigung der Wendeln (14, 16) teilweise in den Vakuum-Abschnitt (20) hineinragt.

8.  Fördervorrichtung (1) nach Anspruch 7, **dadurch gekennzeichnet, dass** der Verdichtungs-Abschnitt (18) sich bis in den Bereich des Auslasses (8) erstreckt.

9.  Fördervorrichtung (1) nach mindestens einem der vorstehenden Ansprüche, **dadurch gekennzeichnet, dass** die Förderschnecken (10, 12) einen Vakuum-Abschnitt (20), den in Förderrichtung (9) sich an diesen anschließenden Verdichtungs-Abschnitt (18) und den in Förderrichtung sich daran anschließenden Portionier-Abschnitt und den sich in Förderrichtung daran anschließenden Auslauf-Abschnitt (24) aufweisen.

10. Fördervorrichtung (1) nach mindestens einem der vorstehenden Ansprüche, **dadurch gekennzeichnet, dass** der Vakuum-Abschnitt der Förderschnecken (10, 12) jeweils Wendeln (14, 16) mit im Wesentlichen konstanter Steigung und der Portionier-Abschnitt (22) wenigstens abschnittsweise die Steigungsänderung aufweist, wobei der Verdichtungs-Abschnitt mit kontinuierlich kleiner werdender Steigung der Wendeln zwischen Vakuum-Abschnitt (20) und Portionier-Abschnitt (22) angeordnet ist.

11. Fördervorrichtung (1) nach mindestens einem der vorstehenden Ansprüche, **dadurch gekennzeichnet, dass** der Portionier-Abschnitt (22) in etwa eine Länge hat, die das 1,5 - 4fache, vorzugsweise 2-fache der Steigung des Portionier-Abschnitts (22) entspricht.

12. Fördervorrichtung (1) nach mindestens einem der vorstehenden Ansprüche, **dadurch gekennzeichnet, dass** sich an den Auslass (8) axial stromabwärts in Förderrichtung (9) mindestens ein Vorsatzgerät, beispielsweise ein Füllrohr (30), ein Längenportioniergerät, ein Hackfleischverarbeitungsgerät oder eine Darmhaltevorrichtung, anschließt, welches mittels eines Adapters, z.B. eines Füllrohrhalters (32) lösbar mit dem Gehäuse (2) koppelbar ist.

13. Fördervorrichtung (1) nach mindestens einem der vorstehenden Ansprüche, **dadurch gekennzeichnet, dass** sie mindestens teilweise in eine Füllmaschine (3) mit Trichter (5) zur Aufnahme des zu fördernden Lebensmittels integriert ist, wobei der Trichter (5) der Füllmaschine (3) im Wesentlichen oberhalb von der Fördervorrichtung (1) derart angeordnet ist, dass das Lebensmittel durch den Einlaufbereich (28) in den Einlass (6) einleitbar ist.

14. Füllmaschine (3) mit einer integrierten Fördervorrichtung (1) nach mindestens einem der vorstehenden Ansprüche 1 bis 10.

Fig. 1

Fig. 2

EP 4 613 102 A1

Fig. 3

Fig. 4

Fig. 5

Fig. 6

β₁ 11.32°  β₂ 11.71°  β₃ 12.09°

EP 4 613 102 A1

22

28

20

17

Steigung 48mm

16

Steigung 72mm

Steigung 24mm

12

13

9

13

11

11

10

14

17

Fig. 7

Europäisches
Patentamt

European
Patent Office

Office européen
des brevets

# EUROPÄISCHER RECHERCHENBERICHT

Nummer der Anmeldung

EP 25 15 6672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 11 32 464 B (VEMAG VERDENER MASCH APP; ZWEIGNIEDERLASSUNG DER DEUTSCH) 28. Juni 1962 (1962-06-28) * Spalte 1, Zeile 1 - Spalte 5, Zeile 59; Ansprüche 1-7; Abbildungen 1-3 * | 1-8, 11-14 | INV. A22C11/08 |
| X | DE 649 638 C (KAMPENS MEK VERKSTED AS) 30. August 1937 (1937-08-30) * Seite 1, Zeile 1 - Seite 4, Zeile 18; Ansprüche 1-4; Abbildungen 1-3 * | 1-5, 11-13 | |
| X | US 10 624 369 B2 (WENGER MFG [US]) 21. April 2020 (2020-04-21) * Zusammenfassung; Ansprüche 1-14; Abbildungen 1-14 * * Spalte 1, Zeile 15 - Spalte 5, Zeile 59 * | 1-5,8,11 | |
| A,D | EP 2 710 896 A1 (VEMAG MASCHINENBAU GMBH [DE]) 26. März 2014 (2014-03-26) * Zusammenfassung; Ansprüche 1-11; Abbildungen 1-3 * | 1-14 | |
| A | FR 2 683 124 A1 (FRADIN MAURICE [FR]; FRADIN CHRISTIAN [FR] ET AL.) 7. Mai 1993 (1993-05-07) * Zusammenfassung; Ansprüche 1-10; Abbildungen 1-4 * * Seite 1, Zeile 16 - Seite 9, Zeile 6 * | 1-14 | |

RECHERCHIERTE SACHGEBIETE (IPC)

A22C

Der vorliegende Recherchenbericht wurde für alle Patentansprüche erstellt

| Recherchenort | Abschlußdatum der Recherche | Prüfer |
|---|---|---|
| Den Haag | 11. Juli 2025 | Rojo Galindo, Ángel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 15 6672

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-07-2025

| Im Recherchenbericht angeführtes Patentdokument | | Datum der Veröffentlichung | Mitglied(er) der Patentfamilie | | Datum der Veröffentlichung |
|---|---|---|---|---|---|
| DE 1132464 | B | 28-06-1962 | KEINE | | |
| DE 649638 | C | 30-08-1937 | DE | 649638 C | 30-08-1937 |
| | | | FR | 802503 A | 07-09-1936 |
| | | | GB | 458970 A | 30-12-1936 |
| | | | US | 2119162 A | 31-05-1938 |
| US 10624369 | B2 | 21-04-2020 | AR | 111040 A1 | 29-05-2019 |
| | | | AR | 124665 A2 | 19-04-2023 |
| | | | AU | 2018221030 A1 | 02-05-2019 |
| | | | BR | 112019008043 A2 | 02-07-2019 |
| | | | CA | 3041093 A1 | 23-08-2018 |
| | | | EP | 3496555 A1 | 19-06-2019 |
| | | | ES | 2949281 T3 | 27-09-2023 |
| | | | HU | E062969 T2 | 28-12-2023 |
| | | | JP | 7157737 B2 | 20-10-2022 |
| | | | JP | 2020510405 A | 09-04-2020 |
| | | | KR | 20190109381 A | 25-09-2019 |
| | | | US | 2018228183 A1 | 16-08-2018 |
| | | | US | 2019364929 A1 | 05-12-2019 |
| | | | WO | 2018152346 A1 | 23-08-2018 |
| EP 2710896 | A1 | 26-03-2014 | CA | 2827018 A1 | 20-03-2014 |
| | | | DE | 102012216912 A1 | 20-03-2014 |
| | | | EP | 2710896 A1 | 26-03-2014 |
| | | | ES | 2601223 T3 | 14-02-2017 |
| | | | PL | 2710896 T3 | 31-05-2017 |
| | | | US | 2014076693 A1 | 20-03-2014 |
| FR 2683124 | A1 | 07-05-1993 | CA | 2099363 A1 | 05-05-1993 |
| | | | EP | 0565710 A1 | 20-10-1993 |
| | | | FR | 2683124 A1 | 07-05-1993 |
| | | | WO | 9308695 A1 | 13-05-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2769621 B1

- EP 2710896 B1